Europäisches Patentamt

European Patent Office

Office européen des brevets

(19)

(11) Publication number: **0 164 259**
A2

(12) **EUROPEAN PATENT APPLICATION**

(21) Application number: 85303900.6

(22) Date of filing: 03.06.85

(51) Int. Cl.⁴: **B 29 C 33/56,** B 29 C 33/02, F 16 L 59/00

(30) Priority: 01.06.84 US 616294

(43) Date of publication of application: 11.12.85 Bulletin 85/50

(84) Designated Contracting States: DE FR GB IT NL SE

(71) Applicant: Holden, Scott C., 19 University Lane, Manchester Massachusetts 01944 (US)
Applicant: Border, John N., 61 Mill Street, Woburn Massachusetts 01801 (US)
Applicant: Suh, Nam P., 34 Maynard Farm Road, Sudbury Massachusetts 01776 (US)

(72) Inventor: Holden, Scott C., 19 University Lane, Manchester Massachusetts 01944 (US)
Inventor: Border, John N., 61 Mill Street, Woburn Massachusetts 01801 (US)
Inventor: Suh, Nam P., 34 Maynard Farm Road, Sudbury Massachusetts 01776 (US)

(74) Representative: Smith, Philip Antony et al, REDDIE & GROSE 16 Theobalds Road, London WC1X 8PL (GB)

(54) **Surface temperature control system.**

(57) A thermally-insulating layer (23) is applied to the inner surface of a mold wall (10) to control the heating and cooling of the mold. Its thickness and thermal properties are chosen so that at least half the temperature drop across the mold wall is in the surface layer. To increase the thermal insulation hollow spheres (24) are included in the layer. Graphite fibres (25A) provide reinforcement against cracking due to thermal cycling. In the case shown they form a conductive mat for electrical resistance heating of the layer but the layer is also useful when the heat comes from the material introduced into the mould. A thin fibrous paper layer (26) can be included in addition.

ACTORUM AG

## SURFACE TEMPERATURE CONTROL SYSTEM

### Introduction

This invention relates generally to surface temperature control systems and, more particularly, to an improved surface temperature control system for controlling the thermal response and thermal insulating characteristics of the surface of a body.

### Background of the Invention

It is often desirable, and in some cases necessary, to control the surface temperature and thermal loss of a body by controlling the thermal response of the surface to energy flux which is applied thereto and by controlling the thermal insulation characteristics thereof so as to contol the energy flux transfer from the surface. In some applications, for example, it is often desirable to control the surface temperature in a manner such that the surface can be heated so as to bring it up to a desired temperature and then can be cooled relatively rapidly without expending an undesirable amount of electrical power during the heating cycle.

In plastic molding processes, for example, it would often be useful for the surface of the mold to be raised to an elevated temperature while the molding material is being inserted into the mold (either by applying energy flux in the form of heat either by using an active heat source or by using the heat supplied from the molten molding material itself), the higher temperature being retained during the insertion process, and then for the surface

ζ

and the molded piece to be cooled for removal. In addition, it is desirable to control the rate of cooling so as to limit the temperature gradient within the part being molded, thereby reducing residual stresses. Such heating and cooling process would improve the characteristics of the molded piece and may not increase the fabrication time or the overall production time for producing a large number of such molded pieces.

By allowing independent control of the surface temperature of the mold, improvements in molding processes, such as in current injection molding processes, can be obtained. For example, freezing or solidification of a flowing column of melt material can be avoided during injection and thinner and longer parts can be fabricated by the correct control of such temperature and the heat flow in the mold system. Residual stress or molecular orientation, and therefore optical properties and surface properties can also be improved by controlling the surface temperature during injection and the heat loss therefrom during the cooling thereof. Further, if a separate surface layer is used to control the surface temperature, it must be capable of withstanding the injection molding pressure as well as be capable of conforming to any other desired structural requirements.

Discussion of the Prior Art

One technique for controlling the surface temperature, as of a solid body, for example, is to heat the entire body itself. Such technique has been used, for example, in controlling the surface temperature of a mold body. However, the amount of

- 2 -

energy required is relatively large and the cooling time for such a surface, and particularly in a molding process, is relatively long so that effective commercial application of such approach where production speed is desired becomes limited. Often, rather than heating the surface to a desired temperature, the surface is heated to a selected intermediate surface temperature, which approach offers neither optimal stress relaxation or cooling, but rather a compromise thereof.

Other techniques for controlling surface temperature have been suggested, such as described in U.S. Patent Nos. 3,733,161 and 3,763,243 issued on May 15, 1973 and October 2, 1973, respectively, to F. J. Nussbaum, and in U.S. Patent No. 4,338,068 issued on July 6, 1982 to N. P. Suh et al. In such patents a relatively thin layer of the contoured wall of the mold is made heat conductive and a plurality of fluid heat conduits or channels associated with the mold body direct the flow of heat transfer so as to regulate the temperature of various zones of the contoured wall. Such approaches, however, are limited by incomplete structural support to the channels, by the complex construction involved, and by the tendency of the materials to be unsuitable for rapid heating and cooling between extreme temperature conditions.

In particular, during the cooling process the Suh et al. structure requires the use of heat pipe devices the configurations of which are relatively complex and expensive to fabricate.

4

Other suggestions have included the use of a layer of electrical resistance material and the application of an electrical potential thereto to achieve the heating of the surface, as on a mold body. For example, U.S. Patent No. 2,979,773 issued to L. L. Bolstad on April 18, 1961 and U.S. Patent No. 4,390,415 issued to W. J. Yang on June 28, 1983 disclosed generally such an approach. Such techniques normally require substantial power and, since the thermal resistances involved tend to be relatively low, long heating times will result in substantial heating of the bulk of the mold body which in turn results in relatively long cooling times.

Another problem which arises when using surface layers of the prior art is that such materials do not tolerate effectively the thermal stresses that are generated during the heating and cooling cycle, particularly over a large number of such cycles, and such layers tend to crack and/or delaminate so as to lose any effectiveness they might otherwise have.

Accordingly it is desirable to devise a technique for controlling the temperature of a surface which offers minimal thermal inertia so that both the time and the amount of energy required to change the energy flux thereof, e.g. to elevate the surface temperature during heating thereof, is minimized and wherein further energy flux change, e.g. the cooling of the surface after heating, can also be relatively fast and easily achieved in a controlled manner once the heating thereof is completed. If such control can be achieved in a molding process, for example, heat from the process material can be used to establish a temperature gradient over short but meaningful time scales, such as the injection cycle in plastics molding processes. When using active heating sources it is also further desirable to minimize the power density required of the heating element. Further it is desirable that the material of such surface layers be able to withstand a meaningful number of heating and cooling cycles over wide temperature ranges while still maintaining their structural integrity.

Brief Summary of the Invention

In accordance with the invention an adherent surface layer on a body subject to an energy flux controls the temperature gradient within the layer and the body so that the primary portion of the temperature gradient, and preferably a substantial portion thereof, lies within the layer and minimizes the required energy transfer for achieving such temperature gradient. Such a layer is selected to allow rapid changes in temperature to occur at the surface of the body whose mass and thermal conductivity characteristics would ordinarily permit only a relatively slow thermal response at its surface. For example, a surface of a mold body is provided with a layer of material selected to have a thermal resistance which provides a sufficiently high thermal resistance in order to achieve rapid surface heating but not too high a thermal resistance to be inconsistent with any requirements for relatively rapid cooling of the surface and the process molding material injected into the mold. This has been found to be achieved with a relatively thin thermally insulative layer of material having relatively low thermal inertia (low thermal mass) so as to respond rapidly to heat applied thereto and good thermal insulative characteristics so as to respond in a rapid but controlled manner for cooling when the heat source is removed.

In general for such purpose the characteristics of the material are selected so that the equilibrium temperature gradient is primarily established in the relatively thin surface layer. To achieve the desired control of the thermal response the material is preferably selected to have low density $\rho$, low heat capacity $C_p$, and low thermal conductivity k. In general such a selection would normally require a minimizing of the $\rho C_p k$ product such that it is at least an order of magnitude, and preferably two to three orders of magnitude, lower than $1.0 (watts/cm^2/C°)^2 \cdot seconds$, which is a low range for most solid metals. The thermal response of a body's surface using such layer should in most applications be at least an order of magnitude faster than that achieved without the use of such layer.

A particular material found useful in these regards is a polymeric plastic material, such as an epoxy or a silicone resin. Such an insulative resin layer has relatively low thermal inertia and can have a thickness selected to provide the desired thermal insulation characteristics so that the surface can be heated relatively fast and controllably cooled in a relatively fast manner. In many applications the polymeric material is preferably filled with voids, as by using a plurality of very small, hollow phenolic, glass or ceramic spheres, sometimes referred to as microballoons. The presence of the microballoons is found to reduce the volume of material needed to achieve the desired thermal insulation and therefore to substantially reduce the mass of heated material, thereby minimizing thermal inertia and providing good thermal insulation characteristics without reducing the mechanical strength, hardness or moldability of the surface layer. Ceramic or glass microballons in particular, for example, tend to reinforce the structure of the resin layer to a greater extent than phenolic elements due to improved temperature resistance, strength and low thermal expansion.

As mentioned previously, one of the problems with surface heating techniques suggested by the prior art is that the materials used as surface layers tend to crack or delaminate at useful operating temperatures. These problems occur since the supporting body on which the layer is positioned does not heat appreciably and the heated surface material is constrained by adhesion not to move relative to the more massive body. The temperature difference between the surface layer and the body causes energy to be stored in the layer material based on the product of its coefficient of thermal expansion and its modulus of elasticity. Common failures due to this energy storage are delamination, fracture or cyclic fatigue. In accordance with the invention such problems can be eliminated by the selection of materials having limited energy storage when subject to constrained heating or cooling. By selecting materials having a relatively low expansion coefficient/elastic modulus product, adhesion can be maintained and the above structural failures can be avoided even under relatively large temperature differences.

Examples of such materials are high temperature epoxies, silicone rubbers, low expansion metals such as Invar, and certain non-metals such as graphite (in the form of deposited coatings and knitted or woven cloths, for example). The high elastic modulus of Invar and graphite is offset by very low expansion coefficients, usually less than 2 microinches per inch-degree Fahrenheit. Polymers on the other hand have relatively high expansion coefficients but very low elastic moduli. Final choice of materials will depend on the applications for which the material will be used, the temperature ranges involved, the fabrication techniques used, and the like.

Although a surface layer, such as a graphite cloth embedded in an insulative resin, is found to work satisfactorily in most applications, in some applications when using graphite cloth it is further found that the insulative layer may still retain a tendency to crack in areas thereof between graphite fiber bundles. In a still further embodiment of the invention for use in some applications, this tendency to crack is reduced by utilizing a relatively thin fiber paper, i.e. graphite or ceramic fiber paper, having a random fiber orientation, embedded as the top layer of the system, and, in effect, superimposed on the graphite fiber cloth within the insulative layer. Such a composite layer provides low thermal inertia to permit rapid heating and cooling while at the same time insuring a minimum tendency to crack or delaminate. When used on a mold body, for example, it also provides a better surface finish and permits further surface treatment of the finish for even more improvement thereto.

Description of the Invention

The invention can be described in more detail with the help of the drawings, wherein

FIG. 1 shows one embodiment of a proposed surface temperature control system for providing control of the temperature of the surface of a body;

FIG. 2 shows diagrammatically in qualitative form the temperature gradient present in the embodiment of FIG. 1;

FIG. 3 shows an alternative embodiment of the invention;

FIG. 4 shows a further alternative embodiment of the invention; and

FIG. 5 shows a still further alternative embodiment of the invention.

FIGS. 6, 7 and 8 show various alternative embodiments of the invention using a material which is selected to maintain the structural integrity of a layer forming the surface of a body.

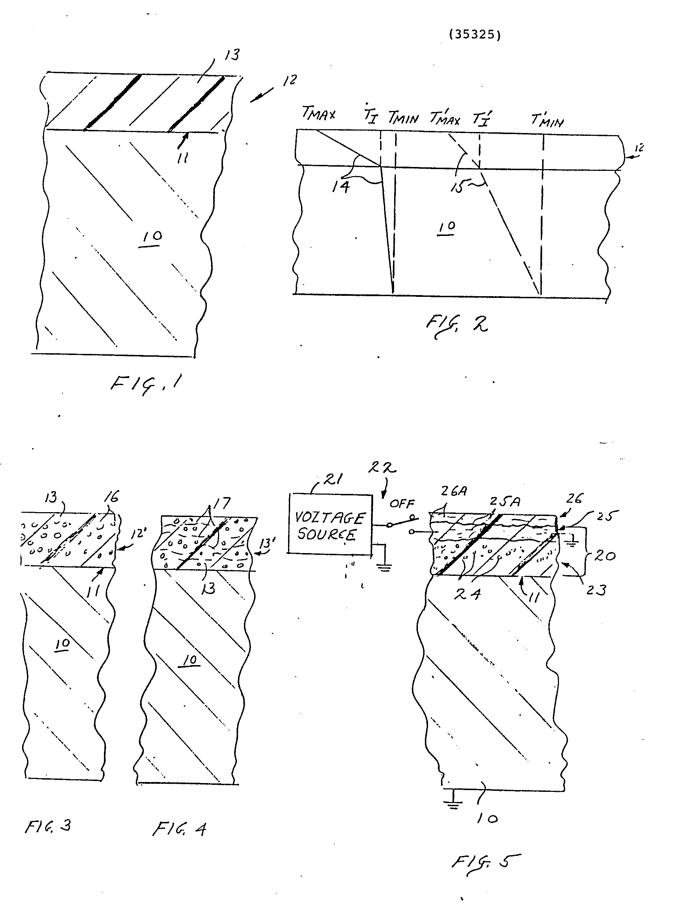

As can be seen in the embodiment of FIG. 1 a surface layer 12 is adhered to a surface 11 of a body 10, the layer in the specific embodiment depicted comprising a polymer resin layer 13.

10

In FIG. 1 and in the figures which follow, it should be noted that the thickness of the layer relative to that of the body 10 is exaggerated for purposes of clarity.

In a particular embodiment, the resin is selected as a high temperature epoxy-type resin, one such resin which has been found to work particularly well in the invention being commercially available under the designation NOVIMIDE from Isochem Resins Inc. of Lincoln, Rhode Island, although it should be possible to find other high temperature epoxy-type resins which could also be used. In addition, silicone resins have been used with a variety of filler materials, such as microballoons, as discussed further below.

The high temperature epoxy resin has a relatively low thermal mass (thermal inertia) and useful thermal insulation characteristics so that as heat is applied thereto, for example, the temperature of the surface layer 13 rises rapidly and produces a large temperature gradient. The material is selected so that, when the surface temperature reaches its desired maximum value, even over long process times, the equilibrium temperature difference is primarily within the surface layer itself, i.e., at least about 50%, and preferably more, of the equilibrium temperature difference is present therein and less than 50%, and preferably much less, thereof is present in the body 10. Thus, as shown in FIG. 2 with reference to the solid line equilibrium temperature gradient curve 14, the temperature difference from $T_{MAX}$ (at the surface) to $T_I$ (at the interface) is greater than the temperature difference from $T_I$ to $T_{MIN}$ in the body 10. Such temperature gradient can be contrasted with the equilibrium temperature gradient for previously suggested techniques using surface layers wherein the temperature difference from $T'_{MAX}$ to $T'_i$ is less than that from $T_I'$ to $T'_{MIN}$, as shown by the dashed-line curve 15.

Since the specific thermal resistance of layer 12 can be determined by varying the thickness of the layer and since the thermal inertia of layer 12 is relatively low, such layer does not resist rapid changes in surface temperature and an extremely effective temperature control system is made available. The thickness of such layer is selected to be less than about 5.0 millimeters (mm.) and in a typical application it may be in a preferred range from approximately 0.5 mm. to approximately 1.5 mm. The heat flow through the layer does not provide an appreciable temperature rise of the substrate 10, when cooling is provided in a normal fashion.

A polymer plastic material flowing into a mold, for instance, would be insulated from loss of heat in a controllable fashion using such a thermally insulative layer while at the same time the amount of heat that would have to be exchanged in order to establish the more static thermal resistance (heat drain) would be minimal, thereby allowing the lowest possible drop in temperature of the melted polymer as it is being injected.

A polymer plastic used in the molding of plastic parts flows into the mold in times of the order of tenths of a second.

However, the insulating characteristic of the molded parts themselves are such that cooling takes on the order of tens of seconds for reasonably sized components. If a mold has too high a surface thermal conduction so as to freeze or solidify the surface of the melted polymer material forming the molded piece in a range of time comparable to the injection time (i.e., in tenths of seconds) the cooling process is too fast and problems in residual stress and short molding shots, and the like, may result from such too rapid cooling of the polymer near the surface. Moreover, too high a surface conductivity drains heat from the portions of the polymer which are directly adjacent to the mold wall and such factor causes too rapid a solidification of the outer surfaces of the polymer layers and a large temperature differential between the surface layers and the interior of the molded polymer. Subsequent removal of interior heat then occurs by conduction from the center of the polymer to its surface and no real advantage in reducing the overall cooling time for the complete part is achieved.

Hence it is desirable that the surface layer have a thermal insulating capability which is selected so as to reduce the surface temperature of the molded part more slowly without substantially increasing the time required to fully cool the central portion. By using a surface layer such as the thermally insulative layer 12 of FIG. 1 the surface cooling rate is such that large differences in temperature within the molded part when the outer portion becomes solidified tend not to be present and residual stress and sink marks are reduced on the finally molded part.  The proper selection of a surface insulative layer can balance the overall loss of heat against the detrimental effects of too high an initial rate of heat loss.  Once the surface insulation characteristics are selected, it is advantageous to have a dynamically thermally responsive insulator to allow the most rapid change in the processing conditions as during the injection of the polymer into the mold.  The insulative layer shown in FIG. 1, wherein more than 50% of the equilibrium temperature gradient lies in the layer itself and wherein the layer is less than about 5 mm. in thickness, provides all of the above advantages of slowing the surface cooling rate while at the same time not substantially increasing the time to fully cool the central portion.

In some applications it may be found that the surface layer 12 may comprise a material which in itself may require a thickness which is greater than 5 mm., for example, in order to achieve the described equilibrium temperature gradient characteristics.  In such cases the thermal response time increases due to the increased mass (volume) of the layer and such slower thermal response time may be undesirable.  Such thickness can be reduced to less than 5 mm. by reducing the volume, or density, of the layer while still achieving the desired thermal response effects.  In order to do so the resin layer 12', as seen in FIG. 3, is substantially filled with voids, the voids in the particular embodiment depicted being in the form

- 13 -

of miniature, hollow spheres 16, often referred to as "microballoons", having outer diameters of about 0.1 mm, or less, such filler material being commercially available in the form of phenolic, glass, or ceramic materials. For example, such microballoon material can be obtained from P.A. Industries of Chatanooga, Tennessee. Even when using a layer having a thickness of 5 mm. or less, the thermal response characteristics can be further improved by using such voids and further reducing the thickness (and hence the mass of the layer) and achieving a faster thermal response time. Thus the use of the microballoon filler material, for example, permits the overall volume (mass) and, hence, the thickness of the layer to be reduced from that which would be required when using the resin without such voids in order to achieve the thermal characteristics desired.

As with layer 12 of FIG. 1, the layer 12' also has a low thermal inertia. When heat is applied thereto an equilibrium temperature gradient is established from the upper surface of layer 12' to a region within the mold body 10, as discussed above with reference to FIG. 2, wherein such temperature gradient lies primarily within layer 12' itself.

When used in a mold, for example, heat can be provided by the molten molding material itself which is inserted into the mold in contact with the surface layer 12 or the surface layer 12' of FIGS. 1 and 3, respectively. Because of the low thermal mass (low thermal inertia) of the layer 12 or layer 12' the temperature thereof rises rapidly so as to maintain the mold surface nearer the temperature of the molding material. When the latter has been completely inserted, cooling then takes place over longer time scales. As above the material of layer 12 or layer 12' and its thickness is selected to provide a sufficient thermal insulation so as to permit cooling to take place relatively rapidly (over a longer time period than the heating thereof) but not so rapidly as to cause the surface of the molded piece to cool too rapidly in comparison with the cooling of the interior of the molded piece. The thermal insulation properties of such layers are such as to control the heat loss rate and effectively minimize the energy transferred to establish heat dissipation. As mentioned above, the thickness of layer 12' will be less than about 5.0 mm., and may typically lie, for example, in a preferred range from about 0.5 mm to about 1.5 mm.

In order to improve the structural integrity of the thermally insulative layer, it can be reinforced by using reinforcement filler material having a low coefficient of expansion, i.e. one which is $4 \times 10^{-6}$ in./in./°F, or less. Such material can be in the form, for example, of fibers, such as glass, ceramic or low expansion metallic fibers which generally are disposed with their long axes parallel or near-parallel to the surface as shown in FIG. 4, wherein the thermal insulating layer 12' comprises a polymer material 13 filled with microballoons 16 and with fibers 17. The fibers lie generally along the direction of the surface, as shown, and are selected to have a low coefficient of expansion as mentioned above along

16

their longitudinal axes. The presence thereof has been found to maintain the structural integrity of the layer 12' even at relatively high temperatures up to 400°F or more while the major portion of the body 10 remains at low temperatures (less than 150°F).

In some applications, the reinforcing filler material may be in the form of particles having such a low coefficient of expansion. One example thereof would be particles of carbon black.

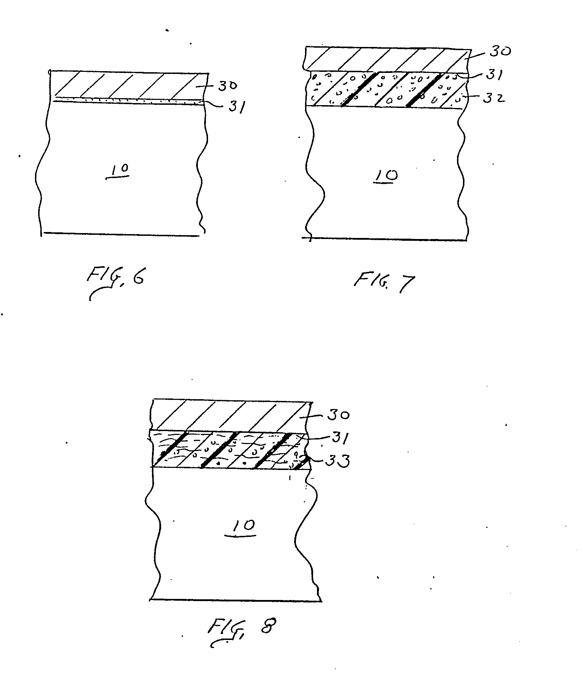

In some applications it may be desirable to raise the temperature of a surface rapidly by using an active heat generating system, e.g., using an external power source. Thus in some molding processes it may be desirable to heat the mold surface prior to or simultaneously with the insertion of molding material either throughout the mold or at specified locations therein. For such purpose a layer as shown in FIG. 5 can be used. In such case a layer 20 on the surface 11 of a mold body 10 is in effect made electrically conductive and an electrical potential is applied thereto as from an external voltage source 21 via a suitable switch arrangement 22. In the exemplary embodiment depicted a polymer (e.g. epoxy) resin layer 23 substantially filled with microballoon spheres 24 can be used, as in FIG. 3, for example (alternatively, in some applications it may be preferable to omit the microballoon elements). In addition an electrically conductive layer, such as a graphite fiber cloth 25 having graphite fibers 25A is embedded in the upper region of polymer resin 23 as part of layer 20, the resin in such region permeating or impregnating the fibrous material. The electrically conductive fibers not only serve to provide electrical resistance heating but, as discussed above, also serve as reinforcing fibers to maintain the structural integrity of the layer 20. Further, as an additional option (discussed in more detail below) a relatively thin layer 26 of low expansion fiber paper (for example, graphite), thickness being exaggerated in FIG. 5, having randomly distributed fibers 26A may be positioned on the upper surface of graphite fiber cloth 25. The resin in turn impregnates the fiber paper also. Heat is generated by applying a voltage from voltage source 21 to the electrically conductive layer, i.e. the graphite fiber cloth 25, in contact with the resin. The generating of heat in the overall layer causes the surface to heat in a relatively short time because of the low thermal inertia of the overall resin layer. As in the previously described embodiment, the equilibrium temperature gradient of the embodiment of FIG. 5 is primarily within layer 20.

Since the specific thermal resistance of either layers 12, 12' or 23 (FIGS. 1, 3, 4 or 5) can be determined by varying the thickness of the layer and since the thermal inertia of layers 12, 12' or 23 are each relatively low, in each case the layer does not resist rapid changes in surface temperature and an extremely effective temperature control system is made available whether using internal heat generation or external sources of heat.

In previously suggested surface layers on a mold body, the layers proposed for such purpose tend to lose their structural integrity, as by cracking or delaminating, due to energy stored from the thermal stresses generated in the various materials at the elevated temperatures required. Such thermal stresses arise because the previously used insulative and heating materials have positive, non-zero (and relatively high) thermal expansion coefficients, and also tend to have high elastic moduli.

In contrast the layers 12, 12' or 23 have much lower thermal expansion coefficients and tend to prevent such cracking and delamination to a greater extent than in such previously known layers. Although the embodiments of FIGS. 1 and 3 are of assistance in this regard, the embodiments of FIGS. 4 and 5 tend to provide greater avoidance of such cracking or delamination problems since the fibers therein have a very low coefficient of thermal expansion and produce minimal stresses even when heated up to temperature ranges of 400°F or more. Since such fibers have a high total surface area, and since such surface area thereby provides a high amount of contact area to the resin system, the tendency to crack or to delaminate tends to be substantially reduced or eliminated. Alternatively, other forms of fibrous materials, e.g., fibrous felt, knitted fiber material, or fiber paper, can be used with the resin layer instead of the fibrous cloth material.

As mentioned above, a problem, however, might arise in some

- 18 -

applications, even when using cloth-like fiber-containing layers in that there is purely polymer resin material present in between the fiber bundles thereof. For example, in graphite fiber cloth, there are regions in which few or no fibers are present. In some applications the resin might tend to crack after many cycles of use in these resin-rich regions which are not provided with any structural reinforcement from the fibers. In order to prevent such cracking in such applications, an additional thin fibrous paper layer 26, e.g. a graphite fiber paper, can be used in combination with and adjacent the resin impregnated fiber cloth. Such graphite fiber paper is relatively thin compared to the thickness of insulative layer 20, and provides random orientations of fibers 26A on the top layer of the overall system. The use of such graphite fiber paper reduces considerably the tendency for the resin to crack in the region between the fibers of the graphite fiber cloth 25.

In a typical system of the invention used for molding polymer plastic materials and using a graphite fiber cloth and graphite fiber paper as in FIG. 5, the thickness of the portion 23 of resin insulating layer 20 can range from about 0.1 mm. to about 0.5 mm. The thickness of the resin impregnated graphite cloth region 25 of insulating layer 20 can range from about 0.1 mm. to about 0.5 mm. and the thickness of the graphite fiber paper 26 is normally in a range from about 0.02 mm. to 0.1 mm. The overall thickness should be about 5.0 mm or less. Electrical contact can be made to the graphite cloth using suitable conductive adhesives if an external power source is used.

The following discussion discloses a suitable exemplary technique for fabricating the particular surface layer 20 of the invention depicted in FIG. 5 on the surface of a body such as a mold, for example, for use in controlling the temperature of such surface in accordance with the invention.

A male master of the mold cavity shape can first be fabricated from appropriate material such as steel or other suitable metal material.

A layer of graphite paper 26 is then laid over the male mold shape and a layer of graphite cloth 25 having suitable fiber integrity and conformability is laid over the graphite paper, both the paper and cloth being positioned as tightly as possible against the male mold shape. A metal mold base such as base 10 is fabricated so as to be positioned over the paper and cloth layer combination and is mechanically maintained so as to provide a selected clearance between the surface of the mold base and the exposed surface of the graphite cloth. The clearance is selected to provide the correct thickness for resin layer 23, which is to be formed therein. The mold base, for example, may contain the necessary alignment pins and cooling lines so as to make a usable plastic mold base piece.

A liquid resin mixture is used to cast the thermal insulation layer 20 and provide resin for impregnating graphite cloth 25. A typical mixture is one which contains one part NOVIMIDE resin, 0.05 parts of carbon black powder, 0.50 parts of glass or phenolic microballoon filler material and 0.6 parts of a hardener, e.g. PRO-20 hardener, available from Isochem Resins of Lincoln, Rhode Island, all such parts being parts by weight.

The components including the male master and mold base are all preheated to a suitable temperature such as 60°C prior to the casting process. The resin mixture is then cast into the clearance between the mold base and the male master having the graphite paper and cloth layers thereon and is allowed to penetrate the graphite cloth and paper layers. The resin system is allowed to cure, usually in an oven at approximately 100°C - 150°C. A suitable mold release material, such as "Easy Release", available from George Mann & Co. of Providence, Rhode Island, can be used on the male master, allowing separation of the completed casting of the resin, the mold base and the graphite layers.

Since the presence of carbon black in the resin used for reinforcement and binding of fiber discontinuities may cause undesirable electrical conduction between the graphite fiber cloth and the mold base, the base can be coated with an electrical insulating varnish prior to the casting process. One such appropriate varnish which can be used for such purpose is sold under the designation "Skybond" by Monsanto Chemical Corporation of St. Louis, Missouri.

When finished, the cast layer exactly duplicates the shape of the male master of the mold cavity and the layers of graphite fiber paper and graphite fiber cloth are formed tightly against the outer surface of the cast microballoon/resin layer.

२२

It would be clear to those in the art from the above discussion that similar techniques can be used to form various ones of the other layers and combinations thereof described above in accordance with the invention.

In initial testing of a mold body of FIG. 5, for example, having a surface made in accordance with the above process, the initial requirements of a low thermal inertia plastic mold having the desired characteristics was essentially confirmed. A molded piece was made in the form of a plate 10 cm wide and 15 cm long and the surface of the mold body rose from 100°F to 350°F in six seconds, with a voltage of 25 volts AC applied to copper electrodes fastened across the width of the graphite fiber cloth layer at each end of the plate. The electrical contacts were applied to the cloth using a suitable electrical adhesive material, such as "Fiber Cement" available from Fiber materials, Inc. of Biddeford, Maine. The current supplied was approximately 40 amperes. When the heating was terminated, the surface temperature fell to approximately 125°F within about ten seconds. The surface of the experimental mold was cycled in a heating/cooling cycle in the above fashion for over 10,000 cycles and only very minor cracking of the polymer resin on the mold's surface occurred. Cracks which occurred during the cooling steps tended to close upon heating of the surface, thereby suitably meeting the surface finish requirements of the plastic mold at the time of injection of the plastic.

As mentioned above, in some applications it may be desirable to use a layer of a selected material which may or may not require the insulative characteristics of the insulative resins discussed above. In such cases a layer of material may be selected for its surface finish, its hardness, its wear, or its electrical resistance characteristics for various applications and must be selected so as to maintain its structural integrity during use, as when it is subject to changes in energy flux therein, e.g., in a multi-cycle heating and cooling process. For such purpose a layer of material in which the product of its coefficient of thermal expansion and its modulus of elasticity is low is selected. Examples of some embodiments thereof are shown in FIGS. 6, 7 and 8.

For example, as shown in FIG. 6, a layer of a material is selected in which the product of its coefficient of expansion and its elastic modulus is less than 200 p.s.i./C°. In a particular example depicted in FIG. 6 a layer 30 comprises a layer of Invar having an expansion coefficient/elastic modulus product of about 30 p.s.i./C° adhered to a body 10 using a suitable adhesive 31.

Alternatively, such a layer may be adhered to a layer of insulative resin as shown in FIG. 7, wherein an Invar layer 30 is adhered to a layer 32 of insulative resin using a microballoon filler (of the type shown in FIG. 3, for example) using the resin as an adhesive at region 31. In some cases the microballoons may be omitted from the resin.

As a further alternative, for example, a layer of Invar can be adhered to a layer of insulative resin suitably reinforced by fibrous material, as shown in FIG. 8 wherein an Invar layer 30 is adhered to a layer 33 of insulative resin having graphite fibers embedded therein (of the type shown in FIG. 4, for example), again using the resin as an adhesive.

Thus, sheets of Invar bonded to a substrate with a silicone rubber thermal insulator, layers of epoxy insulators, with and without fillers of carbon black, ceramic or glass microballoons, and graphite fabrics, such as woven or knitted cloth, felt or paper, have all been found to provide an effective temperature responsive layer free from structural failure modes at temperature differences between the layer and the body to which it is adhered of up to 300°F. One advantage of the use of cloth materials imbedded in an insulator, such as an epoxy resin, is that it provides a very high surface area of contact and thus promotes improved adhesion for many applications. Moreover, if the reinforcing fibers are electrically conductive, as with graphite fibers, an electrical potential can be applied to cause the reinforcement material to act additionally as an active resistance heater.

While the above embodiments discuss an energy flux transfer generally in terms of the heating of a surface layer of a body, the principles discussed herein will also apply in situations where a cooling of the surface is involved. The surface temperatures, for example, can similarly be controlled to respond to a cooling thereof so as to reduce temperature thereof, thereby forming in effect negative, or reverse, equilibrium temperature gradient in the surface and within the body. In accordance with the principles of the invention, the primary portion of such equilibrium temperature gradient is in the surface layer.

In summary, the invention can use any one of the many embodiments discussed above, in various combinations, depending on the application involved. In some cases, the resin material alone will be useful, in others the resin and microballoon combination will be more useful. In still other cases, the resin can be used with non-conductive or conductive reinforcing-fibers or other reinforcing filler material, either with or without the presence of microballoons. In some applications, a fibrous paper can be further used to provide additional structural improvement in any of the above combinations. In still other applications continuous surface layers of a material having a low product of its coefficient of expansion and its elastic modulus can be used, such material being used alone or incorporated in an insulative layer to provide certain selected surface characteristics or to provide a layer which can be used as a resistance heater.

Moreover, while the above description discloses specific embodiments for providing effective control of the thermal characteristics of a surface, other modifications thereto may occur to those in the art within the spirit and scope of the invention. Thus, the mold surface can be made using a low expansion coefficient/elastic modulus material alone, a suitably selected polymer material alone, a polymer material filled with voids, such polymer materials being formed with or without

26

reinforcing filler material and used with or without an added surface layer of a low expansion/modulus material. Other appropriate combinations of the above discussed concepts may also be used in accordance with the invention. Hence, the invention is not to be construed as limited to the particular embodiments disclosed except as defined by the appended claims.

CLAIMS:

1.   A system for controlling the temperature of the surface of a solid body comprising

a layer of thermally responsive material adhered to said surface, said material having a thickness less than about 5.0 mm. and having thermal insulation characteristics selected so that when an energy flux is applied to the surface the temperature of said surface layer and said body are changed in a manner such that at least 50% of the equilibrium temperature difference therein is present in said layer.

2.   A system in accordance with claim 1 wherein said thermally responsive material is a polymer plastic material.

3.   A system in accordance with claim 2 wherein said polymer plastic material is an epoxy-type resin.

4.   A system in accordance with claim 3 wherein said epoxy-type resin is a Novimide resin.

5.   A system in accordance with claim 1 or 2 wherein said thermally responsive material includes a plurality of voids.

₹8

6. A system in accordance with claim 5 wherein said voids are formed by using a filler material comprising a plurality of hollow spheres.

7. A system in accordance with claim 6 wherein said hollow spheres are phenolic, glass or ceramic microballoons.

8. A system in accordance with claim 7 wherein the diameters of said hollow spheres are less than about 0.1 mm.

9. A system in accordance with claim 1 wherein energy flux is applied in the form of heat and the temperature of said surface and said body are increased.

10. A system in accordance with claim 1 wherein said layer further includes a reinforcing filler material.

11. A system in accordance with claim 10 wherein said reinforcing material comprises a plurality of fibers having a coefficient of thermal expansion which is less than about 4 x $10^{-6}$ in./in./°F.

12. A system in accordance with claim 11 wherein said layer comprises a polymer plastic material and said fibers are electrically conductive fibers.

23

13. A system in accordance with claim 12 wherein said conductive fibers are graphite fibers.

14. A system in accordance with claim 13 wherein said graphite fibers are in the form of a woven graphite fiber material.

15. A system in accordance with claim 13 wherein said graphite fibers are in the form of a knitted graphite fiber material.

16. A system in accordance with claim 13 wherein said graphite fibers are in the form of a graphite felt material.

17. A system in accordance with claims 12, 13 or 14 and further including a layer of reinforcing paper adjacent to said graphite fiber material.

18. A system in accordance with claim 17 wherein said reinforcing paper is graphite fiber paper.

19. A system in accordance with claim 10 wherein said reinforcing filler material comprises electrically conductive particles having a coefficient of thermal expansion which is less than about $4 \times 10^{-6}$ in./in./°F.

20. A system in accordance with claim 19 wherein said conductive particles are carbon black particles.

21. A system in accordance with claims 17, 18 or 19 wherein said reinforcing material further includes reinforcing fiber material.

22. A system in accordance with claim 9 and further including means for applying heat to said thermally responsive material.

23. A system in accordance with claim 22 wherein said layer includes electrically conductive material positioned in contact with said thermally responsive material and said heat applying means includes a source of electrical energy and electrical contact means connected to said source and to said electrically conductive material for applying said electrical energy to said electrically conductive material, the temperature of said surface being raised when said source is energized.

24. A system in accordance with claim 23 wherein said source is energized for a time period sufficient to raise and maintain the temperature of said surface within a range from about 150°F to about 450°F.

25. A system in accordance with claim 24 and further including means for continually cooling said solid body to a temperature below at lease 120°F and further wherein the de-energizing of said source permits the temperature of said surface to be reduced to about 150 °F within a range of from about 2 seconds to about 40 seconds.

26. A system in accordance with claim 9 wherein said body is a mold body and the temperature of said surface is raised while a molding material is being injected into said mold body and the temperature of said surface is reduced after said molding material has been fully injected in said mold body.

27. A system for controlling the temperature of a surface of a body comprising

a layer of thermally responsive material adhered to said surface, said material having thermal inertia characteristics selected so that when energy flux is applied thereto the temperature of said surface layer and said body are changed in a manner such that at least 50% of the equilibrium temperature difference therein is present in said layer and said material is further selected to have a low density $\rho$, a low heat capacity $C_p$, and low thermal conductivity $k$.

32

28. A system in accordance with claim 27 wherein the product of $\rho \, c_p \, k$ is at least an order of magnitude less than $1.0 (watts/cm^2/C°)^2 \cdot seconds$.

29. A system in accordance with claim 27 wherein said energy flux is applied in the form of heat and the temperature of said layer and said body are increased.

30. A system for controlling the temperature of a surface of a body comprising

a layer of thermally responsive material adhered to said surface, said material having thermal inertia characteristics selected so that when energy flux is applied thereto the temperature of said surface layer and said body are changed in a manner such that at least 50% of the equilibrium temperature gradient therein is present in said layer and said material is further selected so as to provide a thermal response time of said surface which is at least an order of magnitude faster than the thermal response time of said surface without said layer.

31. A system in accordance with claim 30 wherein said energy flux is applied in the form of heat and the temperature of said layer and said body are increased.

32. A system for controlling the temperature of the surface of a body comprising a layer of thermally responsive material adhered to said surface and including a material selected to have a coefficient of thermal expansion which is less than about 4 x $10^{-6}$ in./in./°F and said thermally responsive material being further selected so that when energy flux is applied thereto the temperature of said surface layer and said body are changed in such a manner that a substantial portion of the equilibrium temperature gradient therein is present in said layer.

33. A system in accordance with claim 32 wherein at least 50% of the equilibrium temperature gradient is present in said layer.

34. A system in accordance with claim 32 wherein said energy flux is applied in the form of heat and the temperature of said layer and said body are increased.

35. A system for controlling the temperature of the surface of a body comprising

a layer of thermally responsive material adhered to the surface of said body, said layer being used to achieve a temperature of said layer which is substantially different from that of said body while the temperature of said body remains substantially constant, at least a portion of said layer comprising a material selected so that the product of its coefficient of thermal expansion and its modulus of elasticity is sufficiently low as to maintain the structural integrity of said layer when the temperature difference between said layer and said body is at least about 150°F.

36. A system in accordance with claim 35 wherein said material is selected so that said product is less than about 200 p.s.i./C°.

0164259

1/2

(35325)

FIG. 1

FIG. 2

$T_{MAX}$  $T_I$  $T_{MIN}$  $T'_{MAX}$  $T'_I$  $T'_{MIN}$

FIG. 3

FIG. 4

VOLTAGE SOURCE

OFF

FIG. 5

FIG. 6

FIG. 7

FIG. 8